# EUROPEAN PATENT APPLICATION

(11) **EP 1 527 948 A1**
(43) Date of publication of application: **04.05.2005**
(21) Application number: 04077964.7
(22) Date of filing: 27.10.2004
(51) Int. Cl.: B60P 1/54, B62D 33/06, B62D 61/06

(54) **Modular chassis of three wheeler machine with floating cabin and electronic control system**

(30) Priority: 27.10.2003 CL 21782003
(71) Applicant: Maquinaria y Tecnologia Bio Bio S.A., Concepcion (CL)
(72) Inventor: Gilles de Landenta, Santiago Jorge, 4271129 Talcahuano (CL)
(74) Representative: Carvajal y Urquijo, Isabel

(57) **Abstract**

A Three Wheeler machine made with a modular chassis (2) which has two sections, a previous one whose main base is flat, that allows the installation of a floating cabin (1) and a rear section with semi pyramidal structure whose purpose is to allow mounting the accessory which is needed, which possesses and electronic system.

## Description

### Description of the State of the Art

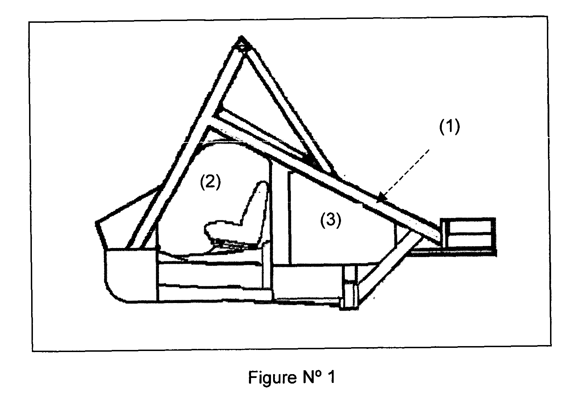

The first Three Wheeler logger machines were invented in South Africa in 1964, by IRVIN BELL. Looking the Figure N° 1, the machine consists on a chassis Mono -block (a single piece) 1 with pyramidal form and triangular base in its interior space, the mechanical components 3 are distributed, this includes a frontal space as cabin of operation 2. Inside the structural profiles of this chassis, the hydraulic oil tanks are located. The machine has three wheels. That is why it received its name (Three Wheeler), two of traction (front) and a free back wheel, or crazy wheel, whose function is to give a third support point and to facilitate the turn in 360° of the machine. Each machine has a front accessory in arm form, usually sustained in the superior part of the chassis, as for example: a grapple, a crane, or a mast for a tower.

Among all these functional options, the chassis doesn't change, it stays with the same structure exactly mono-block as described before. The only changes are in the form that the accessories are connected and the way they work, because of the differences between them.

The Bell factory actually produces two different Three Wheelers to be used as forest loader, the Super Logger and the Ultra Logger. These loaders have identical chassis, only the size of the wheels changes, as well as the relationship of transmission of their cube reducers (reducers of speed located in the final controls). This distinction is very notorious in Chile, but from the factory point of view, it is a simple change of the optional components.

The factory also produces a machine to be used in sugar cane fields. From the point of view of the equipment, it is simpler because of having less accessories, for example, it doesn't count with windshields, its grapple is designed to take the sugar cane and it does not have doors in the driver's cabin, therefore also it is lighter than the previously mentioned ones.

The models, Ultra Logger and Super Logger, were manufactured during almost 10 years in New Zealand, that is why most of these "Bell" machines in Chile have that origin.

In the year 1993, the Bell factory of New Zealand produced a model that had the similar chassis to all the previous machines, but with a different hydraulic. The difference consist in that the commands were pilot operated, what made them easier and more comfortable to operate. The main problem of this model resided in not having hydraulic logic incorporated in the design, it refers to the algorithm that regulates the working and interaction of the hydraulic mechanics components, starting from the mensuration of hydraulic parameters and that acts in: areas, pressures and flows. Due to the above, the motor was subjected to more work than it could carry out, and its revolutions lowered until in some occasions it stopped. When evaluating the results of this machine, the factory Bell ceased its production.

In 1993, the Bell factory from South Africa made small changes to the design of its chassis, enlarging the rear part by approximately 10 cm per side and modifying the cabin to allow a better back vision. Also, the diesel motor was changed, of a Deutz F4L912 to a Cummins BT4, and the hydraulic system, from a manual command system to a pilot operated one and with hydraulic logic. Nevertheless, these changes did not much improve the performance of the equipment. The formerly mentioned has not motivated to the producers, neither the customers to achieve this model. The old model continues to be sold, being more sold than this last one, also being cheaper.

Another Three Wheeler that was marketed in Chile was of "Bond" South African origin too, four units only arrived to Chile. This machine had the size of a Bell Ultralogger and its hydraulics was identical. The differences among both were: the forms of the chassis was modified a little in high and width, to allow in the cabin a space for the feet; and in the form of the main arm crane. Bond has two supports in form of "U", with a cylinder that raises in both sides, Bell uses a single piece with one cylinder to raise.

The Bond machine presented many mechanical problems; it lacked reserves for its components, if these did not correspond to a Bell machine, it was simply necessary to produce them.

A different model that arrived in Chile was the **Barloader**, also of South African origin. It was quite different to the Bell and to the others known. The principal differences were in the type of hydraulic components, wheel motors, commands, diesel motor, chassis (their centre of gravity is higher and without doors, equal is a mono-block), and the boom.

In 1987, a new Three Wheeler appeared, **Tecfor**, made in Chile. The **Tecfor** hydraulic is exactly similar to the Bell, the chassis has only slight differences, it uses the same sizes of tires in the comparable models. The Bell Super-logger corresponds to the normal **Tecfor** and the Bell Ultralogger corresponds to the "Big-Tec". The only significant difference of this machine is that it has an independent hydraulic oil tank, meaning it does not use the chassis as a tank like in the case of the Bell machines.

Another Three Wheeler machine that arrived in Chile in the year 1994, was the model Morback Wolverine 6300XL. This machine had a hydraulic pilot operated commands with the same disposition of components as the "Bell", but with a diesel engine John Deere marks (4239 TO of 117 HP) cooled with water. The machine had bigger space than any of the Bell machines mentioned before, but its chassis was of a single piece Mono -block, by way of difference the machine had conditioned air. In general features, this machine had no success, it arrived as feller and it failed in this field because id did not solve the technical problems characteristic of the task to be carried out. On the other hand, this machine was not easily transformable in a loader. Their ergonomics was not very good due to the vibrations and the noise.

By making a comparison among the different models of Three Wheeler machines, we obtain the following similarities:
■ All have an independent hydrostatic transmission for each front wheel.
■ All have hydraulic bombs of fixed flow and open centre controls to operate the boom of the rotor and the grapple.
■ All have a chassis mono-block (that is to say, the cabin is integrated with the chassis, or otherwise said it is incorporated as a part of the metallic structure), where the operator is located to command the machine.
■ All only use a dumping system in the seat; it is necessary to make notice that the machine cannot be dumped in the wheels because it loses stability.
■ They usually operate with levels of noise on 85 db.
■ They do not have a system that dumps the vibrations of the motor, the hydraulic components, or the own task of loading and discharging logs.
■ They do not isolate efficiently the operator from the temperature that generates the diesel engine and the hydraulic systems.

These last three characteristics provide bad ergonomics to the machines, as established in the Report: "Ergonomic considerations of Three Wheeler machine of the Chilean Association of Security (ACHS)", where the environmental risk to the health is pointed out: exhibition to heat, exhibition to noise and quality of the air [3].

If we have to make references to the technological evolution that the Three Wheeler machines have had through the history, the truth is, that there is not a lot what one can say. If we look at the original pattern of the invented machine by Irvin Bell, remarkable differences are evidenced in the form and size, but concerning functionality there are few. There have been correcting measures of the chassis, but not their original design; there is no successful way to gain space for the operator, because with the mono-block concept there is no solution.

A significant advance was the one mentioned previously in the year 1993, consistent in incorporating a diesel engine cooled by water, a hydraulic system with pilot operated commands and a system with hydraulic logic. From this point of view and to establish a comparison among the machines that exists today, we will take as comparative reference the "Bell" machines being invented the first ones.
■ The "Bond" machine has the same hydraulics, exact disposition of mechanisms and components, with the exception of the hydraulic cylinders that raise (it uses two lateral cylinders the "Bell" one only central) the boom. The difference resides in the form of the chassis that have a different aspect, but that basically it is the same mono-block concept; neither, it solves any space problem for the operator; the solution to the problems of couples mechanisms, fixation and disposition of accessories is bad.
■ The Barloader machine, has prepared the hydraulic components in equal it forms that the "Bell" but they are all different of mark and models. The Diesel engine is of the type cooled by water (Perkins). The chassis is also of the mono-block type with a narrow space for the operator. Maybe the only bigger comfort for the operator is in the hydraulic pilot operated commands, this means that the operator should carry out very little effort to work with them. Another advantage of this machine is that when having a engine cooled by water, less noise is emitted. The excessive weight of this machine, their little high from the floor and their high gravity centre were the big disadvantages.
■ The "Tecfor" machine differs fundamentally of the "Bell" to have the hydraulic oil tanks in independent form of the chassis. This represents advantage, it doesn't subject the operator to the heat of the hydraulic oil in the cabin profiles, but it means a disadvantage when occupying an extra space in the machine (140 It). In relation with the available space for the operator, this machine has less than the "Bell" since although the chassis is almost the same, the Bell brings the diesel engine slightly inclined, what allows that the bombs are below and the driver's seat can also be lower and to give more space.
■ The machine "Morback" "Wolverine" was always sold as feller machine not as a logger as all the others. The only thing that this machine conserves of the original Three Wheeler, is the disposition of the hydraulic components, but not the marks of them. This machine was built with high quality hydraulic components, a wide cabin with air conditioning and hydraulic pilot operated commands as much in the pedals, as in the handle (joysticks) to work of the rest of the mechanisms. This machine maintained a mistake that is common to all the Three Wheelers, the mono-block chassis; it is also a machine of high price with expensive components, in relation to it competition. This machine was not very successful for its value, little mobility in land, its excessive weight and the complicated maintenance.
■ One of the fundamental problems of all is the bad ergonomics [1] and [3]. This problem is due to the following causes characteristic of the design of the machine: excess of vibrations on the operator because the chassis and the cabin are of a single block; excess of noise because in many cases the engine is very noisy and with poor isolation; and excessive heat that is transmitted from the diesel engine and the hydraulic system to the operator through the metallic structure of the chassis and the air that circulates around the components.
Besides the marks and described models, several patents related to Three Wheeler machines exist. Some of them are described in the following.

Patent **JP63038032** has as objective to lend enough manoeuvrability on irregular lands, through a transmission system to the two front wheels and a transmission system to the back wheel.

Patent **JP60092121** has as purpose improve the stability during the operation of the machine in irregular lands, modifying a Three Wheeler machine to a one wheel vehicle, managing the 2 back wheels together with the front wheel to avoid skating. The patent is applied to a type of motorcycle design.

Patent **JP8154313** shows a design that can reduce automatically the speed with a simple structure. It is very safe and advantageous with regard maintenance costs. The patent describes a Three Wheeler design without cabin.
Patent W09003298 describes a Three Wheeler machine that have two front wheels that act directionally, and a back wheel as driver, endowed with great traverse and longitudinal stability, due to the relation between the base of the wheels and the machine, the arrangement of its seats and to its back suspension. The design described in this patent is an automobile type.

Patents **JP6184322, JP6184323, JP6184324** and **JP6184325** describe a mono structure (chassis) for a two or Three Wheeler machine, characterized to be light, rigid for their practical use, dresser to manage and with excellent stability. These patents vary in the composition of the material used in the structure; the use of glass fiber is described, and the use of carbon-glass reinforced with poliolefine resin and with standard resin of polyester. The designs of Three Wheelers described in these patents are of the motorcycle type.

None of the patents related with Three Wheeler machines presents the innovations that are included in the present patent application. In the previously mentioned patents modifications are described that allow improving the manoeuvrability, security, comfort and stability of the machine, but without incorporating innovations in the chassis, cabin or controls as we incorporate here. It is very important to highlight that none of the described patents makes reference to their application as forest logger; moreover, in none a machine is described as the one that we propose, all make allusion only to automobiles, motorcycles and open trineumatics without cabin.

### Description of the Invention

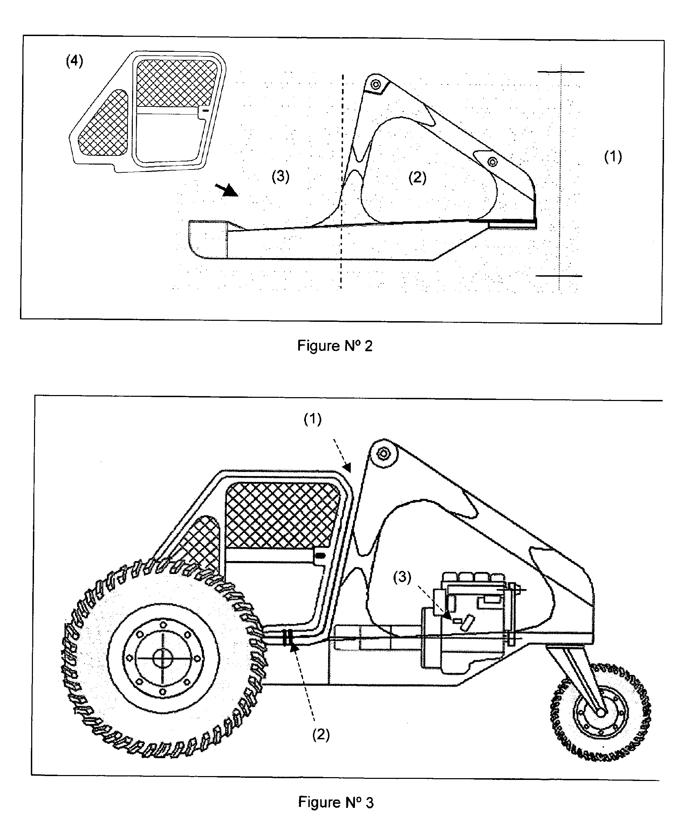

In order to present a solution to the problems or common deficiencies of the Three Wheeler machines [1], we propose a new design (Figure N° 2) that considers a radical change in the form of the chassis 1: it has two sections, a previous one whose main base is plane 3, what allows the installation of a floating cabin 4, independent of the Chassis with own dumping system, and a rear semi-pyramidal structure 2, where the mechanical and hydraulic components will be mounted, and in whose superior structure the functional accessories will be mounted.

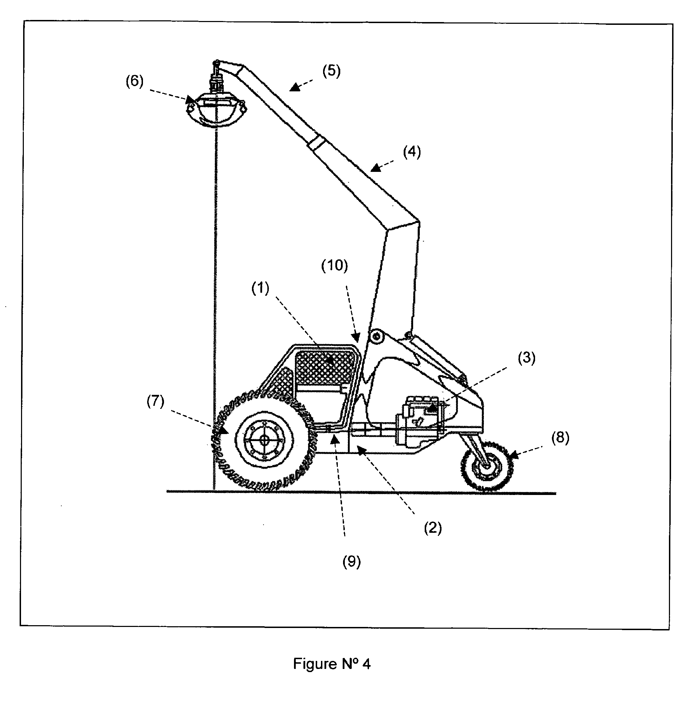

By having a separate cabin some centimeters of the chassis, (Figure N° 3), a space we will call "gap" of air 1, with own dumping system 2, the vibrations get to the operator are avoided, winning a degree of comfort, space and ergonomics never achieved with other Three Wheeler; also, it achieves excellent thermal and acoustic isolation, because there is no direct contact between the metallic structure of the chassis and the cabin. Other important advantages of possessing a floating cabin, is that it can be collapsible, allowing this way an appropriate maintenance of the components 3 and to facilitate their cleaning.

This machine incorporates a control system by means of a Program Logic Control or P.L.C. and an electronics handle (joystick). With this we achieve that the commands are of light and easy working, regulated by a logic programme that prevents that the operator acts in erroneous or dangerous form. This allows not only a better and natural operation of the machine, but is also an optimization of the available power resources, it improves notably and fundamentally its due maintenance, since the PLC control, avoids operations that damage the motor and the hydraulic systems, thus enlarging its useful life.

To visualize the innovations proposed for a Three Wheeler machine described here, Figure N° 4 shows a general outline of a finished machine:

Floating cabin 1 with lateral doors, mounted on the system of dumping 9, and separated from the chassis 2 by a space of air 10, this separation between the booth and the chassis is of at least an inch (Gap of air) which will isolate the first of the second, reducing the emissions of noise coming from the section where the motor 3 is, the mechanical vibrations originated by the propulsion elements, and the inherent temperature to the operation of the hydraulic systems and the motors.

The dumper to be used will be of unidirectional type of compensated action and specific ranges of frequency; these are designed to dissipate the energy associated to the propulsion system and the movement of the machine. The chosen dumpers can be of the hydro-pneumatic and/or hydraulic type, depending on the weight of the cabin and the range of frequency that it is wanted to be dumped. The dumping system prevents mainly the vibrations of high frequency associated to the engine; these vibrations are the most noxious to the moment to assure a good ergonomics.

Together with the dumpers, springs will be set that intended to give a degree of rigidity enough to recover the initial configuration of the cabin (in state of rest) due to the oscillation that acquired for the movement of the machine. The size and number of them will be in function of the weight of the cabin and the number of dumpers intended to use.

In Figure N° 4, the front wheels of traction 7 and the free or crazy back wheel 8 are appreciated. Finally, the mounted accessory is a boom 4 with teleboom 5 and grapple 6 for the load movement.

References
[1] "Manual de Ergonomia forestal" Capitulo 10, E. Apud et al., University of Concepción, Ergonomic Laboratory and Department of Forest Engineering. Website : http://www.udec.cl/ergo-conce/informes/
[2] Website company Bell: http://www.bell.co.za/
[3] "Informe técnico de ergonomia: Consideraciones ergonómicas de vehículo trineumático". Córdova V., Hevia J.C. Ergonomic Department of the Chilean Association for Security, ACHS.

## Claims

1. A Three Wheeler machine **CHARACTERIZED** to have a modular chassis with a previous flat base, independent cabin of the floating type, with an electronic control system.

2. A Three Wheeler machine according to claim 1, **CHARACTERIZED** because its chassis has two sections, a previous one whose main base is flat, what allows the installation of a floating cabin, and a rear section with semi pyramidal structure to which the mechanical and hydraulic components are mounted.

3. A Three Wheeler machine according to claim 1, **CHARACTERIZED** because it possesses a floating cabin separated from the chassis, dumped by means of springs, and three or more hydraulic dumpers and/or hydro-pneumatic of unidirectional type of compensated action and specific ranges of frequency, so that there is no direct contact between the cabin and the structure of the chassis.

4. A Three Wheeler machine according to claim 1, **CHARACTERIZED** because it possesses a control system by means of P.L.C. and handle of the electronics type.
